# EUROPEAN PATENT APPLICATION

(11) **EP 3 866 503 A1**
(43) Date of publication of application: **18.08.2021**
(21) Application number: 18936602.4
(22) Date of filing: 10.10.2018
(51) Int. Cl.: H04W 16/28, H04W 88/02

(54) **USER EQUIPMENT**

(71) Applicant: NTT DoCoMo, Inc., Tokyo 100-6150 (JP)
(72) Inventor: TAKEDA, Kazuki, Tokyo 100-6150 (JP); MATSUMURA, Yuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/037684
(87) International publication number: WO 2020/075233

(57) **Abstract**

A user terminal according to one aspect of the present disclosure includes: a reception section that receives a plurality of codewords generated based on a same transport block using a plurality of layers respectively associated with a plurality of antenna ports for demodulation reference signals; and a control section that controls soft combining of the plurality of codewords.

## Description

### Technical Field

The present disclosure relates to a user terminal in a next-generation mobile communication system.

### Background Art

In the universal mobile telecommunications system (UMTS) network, the specifications of long-term evolution (LTE) have been drafted for the purpose of further increasing high speed data rates, providing lower delays, and so on (see Non-Patent Literature 1). Further, the specifications of LTE Advanced (LTE-A, LTE Rel. 10, 11, 12, 13) have been made for the purpose of further increasing the capacity and advancement of LTE (LTE Rel. 8, 9).

Successor systems of LTE (for example, also referred to as Future Radio Access (FRA), 5th generation mobile communication system (5G), 5G+ (plus), New Radio (NR), New radio access (NX), Future generation radio access (FX), LTE Rel. 14 or 15 or later versions) are also under study.

In the existing LTE system (for example, LTE Rel. 8 to 14), the user terminal (User Equipment (UE)) controls reception of the downlink shared channel (for example, Physical Downlink Shared Channel (PDSCH)) based on downlink control information (DCI, also referred to as DL assignment, etc.) transmitted on a downlink control channel (for example, Physical Downlink Control Channel (PDCCH)). In addition, the user terminal controls transmission of the uplink shared channel (for example, a physical uplink shared Channel (PUSCH)) based on the DCI (also referred to as UL grant).

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (hereinafter, also referred to as NR), it is under study to repetitively transmit at least one (channel/signal) of a channel and a signal. Specifically, a study is underway to repeatedly transmit a channel/signal with a plurality of different time domain resources or frequency domain resources.

However, when the same channel/signal is repeatedly transmitted by a plurality of different time domain resources or frequency domain resources, while the robustness of the channel/signal can be improved, the utilization efficiency of at least one of the time domain resource and the frequency domain resource decreases, and as a result, the system capacity may decrease.

Therefore, one of the purposes of the present disclosure is to provide a user terminal capable of improving robustness of a channel/signal while preventing a decrease in system capacity.

### Solution to Problem

A user terminal according to one aspect of the present disclosure includes: a reception section that receives a plurality of codewords generated based on a same transport block using a plurality of layers respectively associated with a plurality of antenna ports for demodulation reference signals; and a control section that controls soft combining of the plurality of codewords.

### Advantageous Effects of Invention

According to one aspect of the present disclosure, robustness of a channel/signal can be improved while preventing a decrease in system capacity.

### Brief Description of Drawings

Fig. 1 is a diagram illustrating an example of repetition transmission of a channel/signal using a plurality of TRPs.
Fig. 2 is a diagram illustrating an example of repetition transmission of a channel/signal using a plurality of TRPs according to an embodiment.
Fig. 3 is a diagram illustrating an example of scheduling according to a first aspect.
Figs. 4A and 4B are diagrams illustrating an example of DCI #1 and #2 used for scheduling CWs #1 and #2 according to the first aspect.
Fig. 5 is a diagram illustrating an example of scheduling according to a second aspect.
Figs. 6A to 6C are diagrams illustrating an example of DCI used for scheduling CWs #1 and #2 according to the second aspect.
Fig. 7 is a diagram illustrating an example of a schematic configuration of a radio communication system according to an embodiment.
Fig. 8 is a diagram illustrating an example of a configuration of a base station according to an embodiment.
Fig. 9 is a diagram illustrating an example of a configuration of a user terminal according to an embodiment.
Fig. 10 is a diagram illustrating an example of a hardware configuration of a base station and a user terminal according to an embodiment.

### Description of Embodiments

It has been discussed to transmit at least either a channel or a signal (channel/signal) in a repeated manner (repetition) in the NR. The channel/signal is, for example, a downlink shared channel (for example, physical downlink shared channel (PDSCH)), a downlink control channel (for example, physical downlink control channel (PDCCH)), an uplink shared channel (physical uplink shared channel (PUSCH)), an uplink control channel (for example, physical uplink control channel (PUCCH)), a downlink-reference signal (DL-RS), or an uplink reference signal (UL-RS), but is not limited to these.

In NR, repetition transmission of a channel/signal using a plurality of transmission and reception points (TRPs) is also under study. Here, the term "TRP" may be paraphrased as network, base station, antenna equipment, antenna panel, antenna, serving cell, cell, component carrier (CC), carrier, or the like.

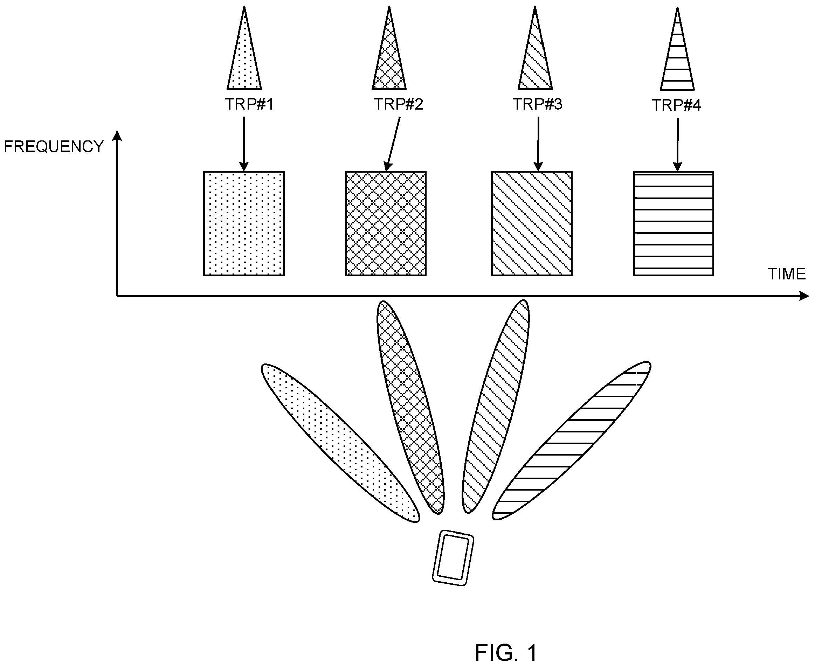

Fig. 1 is a diagram illustrating an example of repetition transmission of a channel/signal using a plurality of TRPs. Repetition transmission of a channel/signal using a plurality of TRPs may be performed in at least one of a plurality of different time domain resources (for example, a plurality of slots or symbols) and a plurality of different frequency domain resources (for example, resource blocks (a plurality of physical resource blocks (PRBs))).

For example, in Fig. 1, the PDSCH is repeated among a plurality of different time domain resources (for example, a plurality of slots), and transmission is made from a TRP that varies for each time of repetition (here, TRPs #1 to #4).

As illustrated in Fig. 1, when a channel/signal is repeatedly transmitted in different time domain resources or frequency domain resources, the robustness of the channel/signal can be improved. On the other hand, since different time domain resources or frequency domain resources are used for each time of repetition, the system capacity may decrease.

In NR, multiple input multiple output (MIMO) transmission is adopted in which different pieces of data are transmitted in parallel from a plurality of TRPs using the same time domain resource and frequency domain resource (time/frequency domain resource).

In MIMO transmission, different pieces of data are transmitted in different spatial domain resources using the same time/frequency domain resource. Here, the spatial domain resource may be, for example, a layer, an antenna port, an antenna port of a demodulation reference signal (DMRS) (DMRS port), a beam, or a TRP.

For example, in MIMO transmission of NR Rel. 15, up to two transport blocks (TBs) are transmitted in a plurality of layers (for example, up to eight layers). Each layer may be associated with a DMRS port. Here, the TB is a transmission unit of data (which may include at least one of user data and higher layer control information) in a physical layer.

In such MIMO transmission (utilization of a plurality of layers), different TBs are subjected to multiplexing (spatial divisional multiplexing (SDM)) in a spatial domain (different layers), so that the system capacity can be increased. On the other hand, if the same TB is subjected to SDM in a spatial domain, it can also contribute to the improvement of robustness.

Therefore, the present inventors have made the present invention by focusing on a fact that, by repeatedly transmitting the same TB in a spatial domain (different layers) (that is, SDM), and soft combining a plurality of TBs in which the UE has been subjected to SDM, spatial diversity gain can be obtained and robustness can be improved.

Hereinafter, an embodiment according to the present disclosure will be described in detail with reference to the drawings. Although repetition transmission of a PDSCH in the spatial domain will be described below, the present disclosure can be appropriately applied to other downlink channels (for example, a PDCCH) and uplink channels (for example, a PUSCH or a PUCCH).

In one embodiment of the present disclosure, a plurality of codewords (CWs) are generated based on a same TB. Each of the plurality of CWs is mapped to one or more layers and transmitted. Each layer is associated with a DMRS port.

Here, the codeword (CW) is a sequence (set) of coded bits generated based on a TB. The CW can be considered as a TB having an error protection function. For example, one CW may be generated by performing the processing as below on one TB.
- Attaching a cyclic redundancy check (CRC) with a predetermined number of bits to one TB for error detection.
- Segmenting the TB with CRC added into one or more code blocks (CBs).
- Encoding each segmented CB using a predetermined code (for example, low density parity check coding code (LDCP code)) for error correction.
- Applying rate matching and hybrid automatic repeat request (HARQ) of the physical layer to each encoded CB.
- Re-assembling one or more CBs processed as described above to generate one CW.

In rate matching, encoding bits written in a circular buffer are fetched from the circular buffer based on a redundancy version (RV). By selecting different RVs, different sets of coded bits that represent the same set of information bits may be generated.

The plurality of CWs may be generated by performing the above processing on the same TB with different devices (for example, different TRPs). The RVs described above may be the same or different among the plurality of CWs.

The plurality of CWs described above may be generated by duplicating at least one of the same TB, an information bit sequence constituting the same data, a code block (CB), a code block group (CBG) including one or more code blocks, a transport block (TB), a codeword, and a codeword sequence after encoding.

Note that the "duplication" does not necessarily refer to duplicating all of the same bit sequence, but may instead refer to duplicating at least a portion of a codeword generated from the same information bit sequence or at least a portion of a modulation symbol sequence. For example, among a plurality of duplicated CWs, RVs may be the same or different. Alternatively, the plurality of duplicated CWs may be modulation symbol sequences obtained by modulating the different RVs or the same RV.

Each CW is scrambled using a predetermined sequence and modulated by a predetermined modulation scheme. Each CW (modulation symbol of each CW) is mapped to one or more layers (for example, up to four layers). Here, the layer corresponds to the stream in MIMO, and the number of streams that can be transmitted simultaneously in MIMO corresponds to the number of layers.

One or more layers to which each CW is mapped may be determined based on the number of layers and the number of CWs. For example, in the case of eight layers and two CWs, a first CW may be mapped to layers #0 to #3, and a second CW may be mapped to layers #4 to #7.

Each layer is mapped to a DMRS port. Specifically, each layer may be mapped to a DMRS port that belongs to a predetermined DMRS port group. Here, the DMRS port group is a group of one or more DMRS ports, and may be formed for each TRP.

The "DMRS port group" and "DMRS port" are used interchangeably and may be paraphrased with each other. "CW", "TB", and "data" are used interchangeably and may be paraphrased with each other.

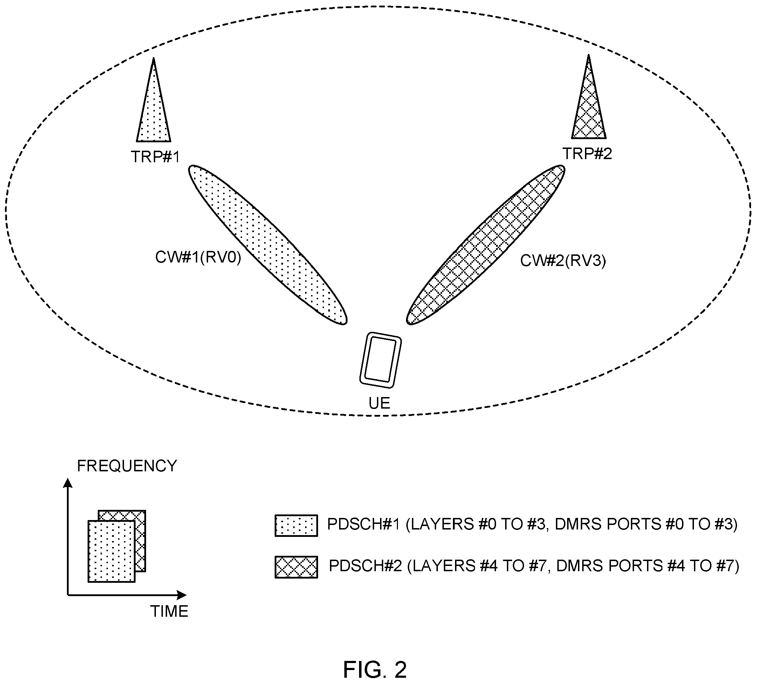

Fig. 2 is a diagram illustrating an example of repetition transmission of a channel/signal using a plurality of TRPs according to an embodiment. For example, Fig. 2 illustrates an example in which two CWs #1 and #2 generated based on the same TB are transmitted from different TRPs #1 and #2 using PDSCHs #1 and #2. In Fig. 2, it is assumed that the CWs #1 and #2 are transmitted in eight layers, but the number of layers is only required to be two or more.

Rate matching of the CW #1 may be performed using a RV0, and rate matching of the CW #2 may be performed using a RV3. For example, the CW #1 may be mapped to layers #0 to #3 respectively associated with DMRS ports #0 to #3 in the DMRS port group #1. On the other hand, the CW #2 may be mapped to layers #4 to #7 respectively associated with DMRS ports #4 to #7 in the DMRS port group #2.

As illustrated in Fig. 2, different DMRS port groups (or DMRS ports) may have different quasi-co-location (QCL) relationships (QCL relationships). The QCL is herein an index showing the statistical properties of the channel/signal. For example, when the DMRS port group and another signal (or an antenna port of the another signal) have a QCL relation, this may mean that it is possible to assume that at least one of Doppler shift, Doppler spread, average delay, delay spread, and spatial parameter (for example, spatial Rx parameter) related to the DMRS port group is the same as that of the another signal.

Another signal having the QCL relationship with the DMRS port group may be a reference signal (for example, a channel state information reference signal (CSI-RS) or a synchronization signal block (SSB). The SSB is a signal block including at least one of a primary synchronization signal (PSS), a secondary synchronization signal (SSS), and a physical broadcast channel (PBCH), and may be referred to as an SS/PBCH block or the like.

In Fig. 2, the DMRS ports #0 to #3 of the DMRS port group #1 are used in the TRP #1, and the DMRS ports #4 to #7 of the DMRS port group #2 are used in the TRP #2, so that the DMRS port groups #1 and #2 have different QCL relationships. The UE may receive information related to the QCL relationship and recognize that the DMRS ports #0 to #3 and #4 to #7 are associated with different TRPs based on that information.

Information related to the QCL relationship may be a transmission configuration indication (TCI) state (TCI state), a TCI state indicator, a sounding reference signal (SRS) resource indicator (SRI), or spatial related information (spatial related info). For example, the TCI state may indicate a resource for a downlink reference signal (for example, a CSI-RS resource identifier or an SSB identifier) having the QCL relationship with the DMRS port group.

In Fig. 2, the UE may apply soft combining to the CWs #1 and #2 demodulated using the DMRS in different DMRS port groups (or DMRS ports). Spatial diversity gain can be obtained by soft combining the CWs #1 and #2. As a result, the utilization efficiency of time/frequency domain resources can be improved, so that robustness can be improved while preventing a decrease in system capacity due to repetition.

Here, soft combining is to combine different received signals. Soft combining may be, for example, one of the hybrid automatic repeat request (HARQ) mechanisms in the medium access control (MAC) layer. Soft combining may be referred to as chase combining, incremental redundancy, and the like. The combined received signals may be a plurality of CWs with different RVs. The plurality of CWs may have the same HARQ process number (HPN).

As described above, a plurality of CWs generated based on the same TB may be scheduled by a plurality of different pieces of DCI (first aspect), or may be scheduled by a single piece of DCI (second aspect).

Although an example in which two CWs are transmitted in a plurality of different layers based on the same TB will be mainly described below, the number of CWs (that is, the number of repetitions in the spatial domain) may be two or more.

### (First Aspect)

In a first aspect, a case where a plurality of CWs generated based on the same TB are scheduled by different pieces of DCI will be described. Specifically, two pieces of DCI may be each used for scheduling one or more layers of the PDSCH for two CWs generated from the same TB.

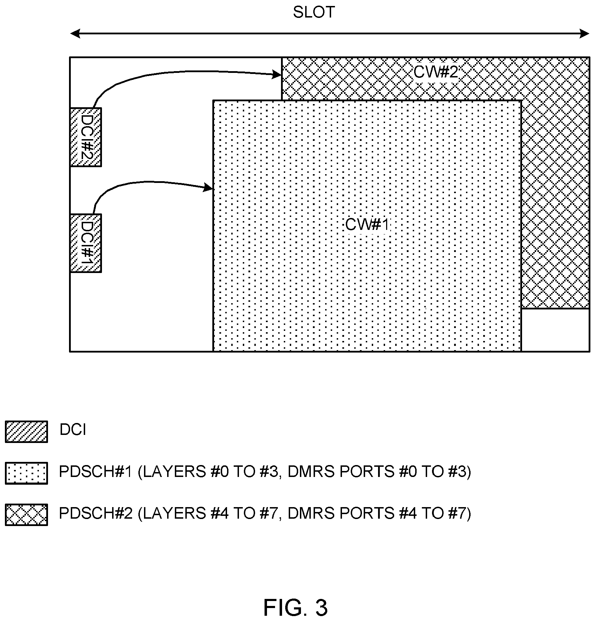

Fig. 3 is a diagram illustrating an example of scheduling according to the first aspect. For example, in Fig. 3, the DCI #1 schedules the PDSCH #1 (CW #1) mapped on layers #0 to #3 (and DMRS ports #0 to #3). The DCI #2 schedules PDSCH #2 (CW #2) mapped in the layers #4 to #7 (and the DMRS ports #4 to #7).

In Fig. 3, the layers #0 to #3 may be associated with the DMRS ports #0 to #3, respectively, and the layers #4 to #7 may be associated with the DMRS ports #4 to #7, respectively. The DMRS ports #0 to #3 and #4 to #7 may belong to different DMRS port groups.

In Fig. 3, each DCI may include information related to the QCL relationship of the DMRS port group to be scheduled (TCI state or TCI state identifier). The fact that a plurality of DMRS port groups have different QCL relationships (TCI state) may be synonymous with the fact that the PDSCHs #1 and #2 (for example, CWs #0 and #1) corresponding to the plurality of DMRS port groups are transmitted from different TRPs (see, for example, Fig. 2).

In Fig. 3, the UE may detect the DCI #1 and #2 by monitoring (blind decoding) the search space or the PDCCH candidates constituting the search space. The DCI #1 and #2 may be detected in the same search space or may be detected in different search spaces. The search space may be paraphrased as a set including one or more search spaces (search space set) or the like.

The search space may be associated with a control resource set (CORESET). The CORESET may be configured in a cell (also referred to as a serving cell, carrier, component carrier, or the like) or a partial bandwidth (bandwidth part (BWP)) in the cell.

As illustrated in Fig. 3, when the CWs #1 and #2 generated from the same TB are scheduled by different pieces of DCI #1 and #2, the UE may control the soft combining of the CWs #1 and #2 that is transmitted in PDSCHs in different DMRS port groups (layers). For example, the UE may apply at least one of the following first to third soft combining controls.

### (1) First soft combining control

When single TB duplication across the CWs #1 and #2 is not configured, the UE does not have to soft combine the CWs #1 and #2.

Here, "single TB duplication across the CWs #1 and #2 is not configured" may refer to a fact that information related to single TB duplication across the CWs #1 and #2 is not received by higher layer signaling (for example, radio resource control (RRC) signaling), or that the duplication is not activated.

In this case, in the higher layer (for example, packet data convergence protocol (PDCP) layer), the UE may recognize that two packets in which CWs #1 and #2 are decoded are duplicated, and discard one of the two decoded packets. The PDCP layer is a layer higher than the MAC layer in which retransmission control based on HARQ is performed, and retransmission control may be performed at the packet level.

Alternatively, the UE does not soft combine the CWs #1 and #2, but the UE may recognize that the CWs #1 and #2 are based on the same TB and control feedback of delivery acknowledgment information (also referred to as hybrid automatic repeat request acknowledgement (HARQ-ACK), acknowledgement (ACK) or Non-ACK (NACK), A/N, and the like) of the CWs #1 and #2.

For example, the UE may feedback an ACK as long as one of the CWs #1 and #2 is correctly decoded. In this case, the UE does not have to care (for example, decode) the other CW.

### (2) Second soft combining control

When single TB duplication of across CWs #1 and #2 is configured, the UE may soft combines the CWs #1 and #2.

Here, "single TB duplication across the CWs #1 and #2 is configured" may refers to a fact that information related to single TB duplication across CWs #1 and #2 is received by higher layer signaling (for example, RRC signaling), or that the duplication is activated.

### (3) Third soft combining control

The UE may control the soft combining of the CWs #1 and #2 based on at least one of the pieces of DCI #1 and #2. Specifically, the UE may control the soft combining of the CWs #1 and #2 based on at least one of the following (3.1) to (3.4) .
(3.1) Radio network temporary identifier (RNTI) used for scrambling at least one CRC (CRC scramble) of DCI #1 and #2
(3.2) Search space where at least one of pieces of DCI #1 and #2 is detected
(3.3) At least one format of DCI #1 and #2 (DCI format)
(3.4) Value of one or more fields included in at least one of pieces of DCI #1 and #2

### (3.1)RNTI

When the RNTI used for at least one CRC scramble of the DCI #1 and #2 is a specific RNTI (for example, X-RNTI or MCS-C-RNTI), the UE may consider (also referred to as assume or expect) that the CWs #1 and #2 scheduled in the DCI #1 and #2 are duplicates of a single TB, and soft combine the CWs #1 and #2.

When the RNTI used for at least one CRC scramble of the DCI #1 and #2 is an RNTI other than the specific RNTI (for example, Cell-RNTI (C-RNTI)), the UE may consider that the CWs #1 and #2 scheduled in the DCI #1 and #2 are not duplicates of a single TB, and does not have to soft combine the CWs #1 and #2.

### (3.2) Search Space

When the search space in which at least one of the pieces of DCI #1 and #2 is detected has a specific configuration, the UE may consider that the CWs #1 and #2 scheduled in the DCI #1 and #2 are duplicates of a single TB, and soft combine the CWs #1 and #2. The specific configuration may be, for example, that the search space identifier (search space ID) is greater than a predetermined value (for example, six) or equal to or greater than a predetermined value (for example, seven).

When the search space in which at least one of the pieces of DCI #1 and #2 is detected has a configuration other than the specific configuration (for example, the search space ID is smaller than a predetermined value (for example, seven) or equal to or less than a predetermined value (for example, six)), the UE may consider that the CWs #1 and #2 scheduled in the DCI #1 and #2 are not duplicates of a single TB, and does not have to soft combine the CWs #1 and #2.

### (3.3) DCI format

When at least one of the pieces of DCI #1 and #2 has a specific DCI format (DCI format other than DCI format 1_0 or 1_1 (for example, DCI format 1_2)), the UE may consider that the CWs #1 and #2 scheduled in the DCI #1 and #2 are duplicates of a single TB, and soft combine the CWs #1 and #2.

When at least one of the pieces of DCI #1 and #2 has a DCI format other than the specific DCI format (for example, DCI format 1_1), the UE may consider that the CWs #1 and #2 scheduled in the DCI #1 and #2 are not duplicates of a single TB, and does not have to soft combine the CWs #1 and #2.

### (3.4) One or more field values in DCI

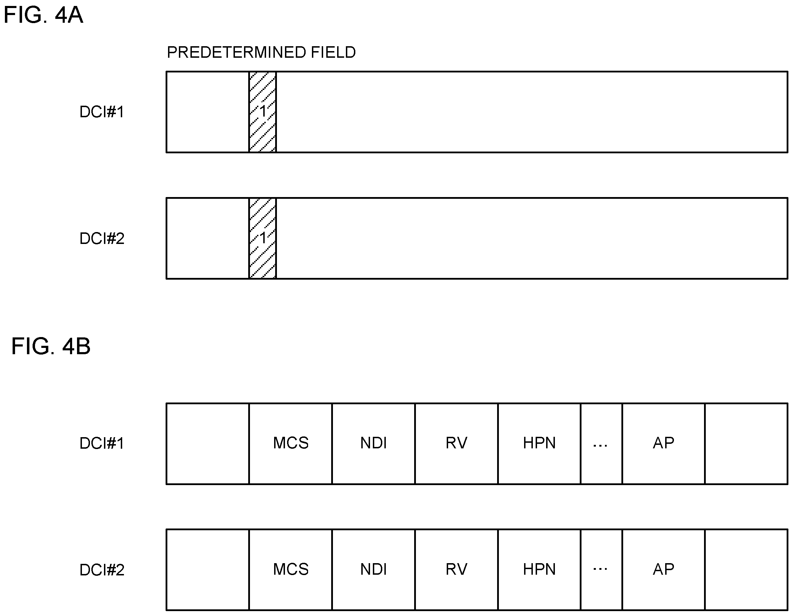

At least one of the pieces of DCI #1 and #2 may be added with a predetermined number of bits of field indicating whether the CWs #1 and #2 are duplicates of a single TB (4.1). Alternatively, a set of values for one or more fields included in at least one of the pieces of DCI #1 and #2 may indicate whether the CWs #1 and #2 are duplicates of a single TB (4.2). Figs. 4A and 4B are diagrams illustrating an example of the DCI #1 and #2 used for scheduling the CWs #1 and #2 according to the first aspect.

### (3.4.1) Additional fields

As illustrated in Fig. 4A, the DCI #1 and #2 may be added with a field of a predetermined number of bits (for example, one bit) indicating whether the CWs #1 and #2 are duplicates of a single TB. The UE may control the soft combining of the CWs #1 and #2 based on the value of the field.

For example, when the value of the field is aligned (for example, 0 or 1) between the pieces of DCI #1 and #2, the UE may consider that the CWs #1 and #2 scheduled in the DCI #1 and #2 are duplicates of a single TB, and soft combine the CWs #1 and #2.

Alternatively, when values of the field included in both the DCI #1 and the DCI #2 is 1, the UE may consider that the CWs #1 and #2 scheduled in the DCI #1 and #2 are duplicates of a single TB, and soft combine the CWs #1 and #2.

### (3.4.2) Set of values for one or more fields

As illustrated in Fig. 4B, the UE may control the soft combining of the CWs #1 and #2 based on the set of existing field values in the DCI #1 and #2. It is sufficient that the set of values of an existing field is, for example, a set of values of at least one of the following fields (field value set).
- Field indicating a modulation and coding scheme (MCS) index (also referred to as MCS field, MCS index field, and the like)
- Field indicating a new data indicator (NDI) (NDI field)
- Field indicating a HARQ process number (HPN) (HPN field)
- Field indicating RV (RV field)
- Field indicating the DMRS port number (antenna port (AP) field)

Specifically, when at least one of two conditions that the field value set described above is aligned between the DCI #1 and the DCI #2, and the field value set described above is fixed to a certain value (for example, delta) between the DCI #1 and the DCI #2 is satisfied, the UE may consider that the CWs #1 and #2 scheduled in the DCI #1 and #2 are duplicates of a single TB, and soft combine the CWs #1 and #2.

On the other hand, when the field value set described above is not aligned between the DCI #1 and the DCI #2, or the field value set described above is not fixed to a certain value (for example, delta) between the DCI #1 and the DCI #2, the UE may consider that the CWs #1 and #2 scheduled in the DCI #1 and #2 are not duplicates of a single TB, and does not have to soft combine the CWs #1 and #2.

For example, whether data is new data or retransmission data may be the same between the DCI #1 and the DCI #2 (CWs #1 and #2). That is, if the CWs #1 and #2 are duplicates of a single TB, the values of the NDI fields in the DCI #1 and the DCI #2 may be the same. If the CWs #1 and #2 are duplicates of a single TB, the values in the HPN fields may be the same between the DCI #1 and the DCI #2 (CWs #1 and #2).

On the other hand, even if the CWs #1 and #2 are duplicates of a single TB, at least one of values of the MCS field, RV field, and AP field may be different or the same between the DCI #1 and the DCI #2 (CWs #1 and #2). For example, the RV field of the DCI #1 may indicate 0 and the RV field of the DCI #2 may indicate 0 or 2.

For example, when one of the NDI field values of the DCI #1 and the DCI #2 indicates that it is new data (toggled) and the other NDI field value indicates it is retransmission (not toggled), the UE may consider that the CWs #1 and #2 scheduled in the DCI #1 and #2 are not duplicates of a single TB, and does not have to soft combine the CWs #1 and #2.

On the other hand, when the NDI field values of both the DCI #1 and the DCI #2 indicate that they are new data or retransmissions, the UE may consider that the CWs #1 and #2 scheduled in the DCI #1 and the DCI #2 are duplicates of a single TB and soft combine the CWs #1 and #2.

According to the first aspect, soft combining of the CWs #1 and #2 is appropriately controlled when the CWs #1 and #2 generated based on the same TB are scheduled by different pieces of DCI #1 and #2.

### (Second Aspect)

The second aspect differs from the first aspect in that a plurality of CWs generated based on the same TB are scheduled by a single piece of DCI. Specifically, one piece of DCI may be used for scheduling a plurality of layers of the PDSCH for two CWs generated from the same TB. The following description will focus on differences from the first aspect.

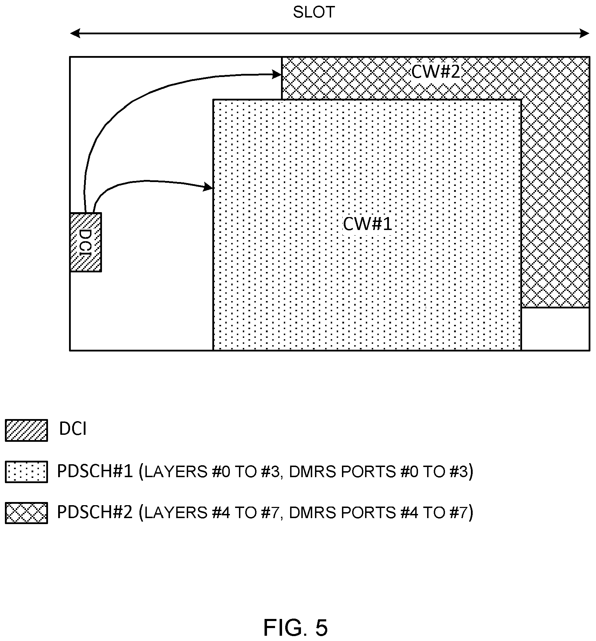

Fig. 5 is a diagram illustrating an example of scheduling according to the second aspect. For example, in Fig. 5, a single piece of DCI schedules a PDSCH #1 (CW #1) mapped to one or more of layers #0 to #7 (and DMRS ports #0 to #7), and a PDSCH #2 (CW #2) mapped to the rest layer.

Which layer the CWs #1 and #2 are mapped to may be predetermined in the specifications, or may be determined according to predetermined parameters (for example, the number of CWs and the number of layers). For example, in Fig. 5, the CW #1 is mapped to layers #0 to #3, and the CWs #2 is mapped to layers #4 to #7, but the present disclosure is not limited to this.

In Fig. 5, for example, the layers #0 to #3 are associated with the DMRS ports #0 to #3, respectively, and the layers #4 to #7 may be associated with the DMRS ports #4 to #7, respectively, but the present disclosure is not limited to this. The DMRS ports #0 to #3 and #4 to #7 may belong to different DMRS port groups #1 and #2.

A single piece of DCI scheduling the CWs #1 and #2 illustrated in Fig. 5 may include information (for example, a TCI state or a TCI state ID) related to the QCL relationships of each of the DMRS ports #0 to #3 and #4 to #7 (DMRS port groups #1 and #2). That is, as illustrated in Fig. 2, the CWs #1 and #2 scheduled by the same DCI may be transmitted from different TRPs #1 and #2.

In Fig. 5, the UE may detect the DCI by monitoring the search space or the PDCCH candidates constituting the search space.

As illustrated in Fig. 5, when the CWs #1 and #2 generated from the same TB are scheduled by a single piece of DCI, the UE may control the soft combining of the CWs #1 and #2 that is transmitted in PDSCHs in different DMRS port groups (layers). For example, the UE may apply at least one of the following fourth to sixth soft combining controls.

### (4) Fourth soft combining control

When single TB duplication of across CWs #1 and #2 is not configured, the UE does not have to soft combine the CWs #1 and #2. Specifically, the UE may operate as described in the first soft combining control.

### (5) Fifth soft combining control

When single TB duplication of across CWs #1 and #2 is configured, the UE may soft combines the CWs #1 and #2. Specifically, the UE may operate as described in the second soft combining control.

### (6) Sixth soft combining control

The UE may control the soft combining of the CWs #1 and #2 based on a single piece of DCI. Specifically, the UE may control the soft combining of the CWs #1 and #2 based on at least one of the following (6.1) to (6.4).
(6.1) RNTI used for CRC scrambling of the above single piece of DCI
(6.2) Search space where the above single piece of DCI is detected
(6.3) Above single piece of DCI format (DCI format)
(6.4) Values for one or more fields included in the above single piece of DCI

### (6.1)RNTI

When the RNTI used for CRC scramble of the above single piece of DCI is a specific RNTI (for example, X-RNTI or MCS-C-RNTI), the UE may consider that the CWs #1 and #2 scheduled in the DCI are duplicates of a single TB, and soft combine the CWs #1 and #2.

When the RNTI used for CRC scramble of the above single piece of DCI is an RNTI other than the specific RNTI (for example, C-RNTI), the UE may consider that the CWs #1 and #2 scheduled in the DCI are not duplicates of a single TB, and does not have to soft combine the CWs #1 and #2.

### (6.2) Search space

When the search space in which the above single piece of DCI is detected has a specific configuration, the UE may consider that the CWs #1 and #2 scheduled in the DCI are duplicates of a single TB, and soft combine the CWs #1 and #2. The specific configuration may be, for example, that the search space identifier (search space ID) is greater than a predetermined value (for example, six) or equal to or greater than a predetermined value (for example, seven).

When the search space in which the above single piece of DCI is detected has a configuration other than the specific configuration (for example, the search space ID is smaller than a predetermined value (for example, seven) or equal to or less than a predetermined value (for example, six)), the UE may consider that the CWs #1 and #2 scheduled in the DCI are not duplicates of a single TB, and does not have to soft combine the CWs #1 and #2.

### (6.3) DCI format

When the above single piece of DCI has a specific DCI format (DCI format other than DCI format 1_0 or 1_1 (for example, DCI format 1_2)), the UE may consider that the CWs #1 and #2 scheduled in the DCI are duplicates of a single TB, and soft combine the CWs #1 and #2.

When the above single piece of DCI has a DCI format other than the specific DCI format (for example, DCI format 1_1, the UE may consider that the CWs #1 and #2 scheduled in the DCI are not duplicates of a single TB, and does not have to soft combine the CWs #1 and #2.

### (6.4) One or more field values in DCI

The above single piece of DCI may be added with a predetermined number of bits of field indicating whether the CWs #1 and #2 are duplicates of a single TB (6.4.1). Alternatively, a set of values for one or more fields (field value set) included in the DCI may indicate whether the CWs #1 and #2 are duplicates of a single TB (6.4.2).

Alternatively, the TB size (TBS) corresponding to each of the CWs #1 and #2 determined based on the DCI may indicate whether the CWs #1 and #2 are duplicates of a single TB (6.4.3). Alternatively, configuration may be performed in the higher layer so that at least one bit of a predetermined field in the DCI indicates whether the CWs #1 and #2 are duplicates of a single TB (6.4.4).

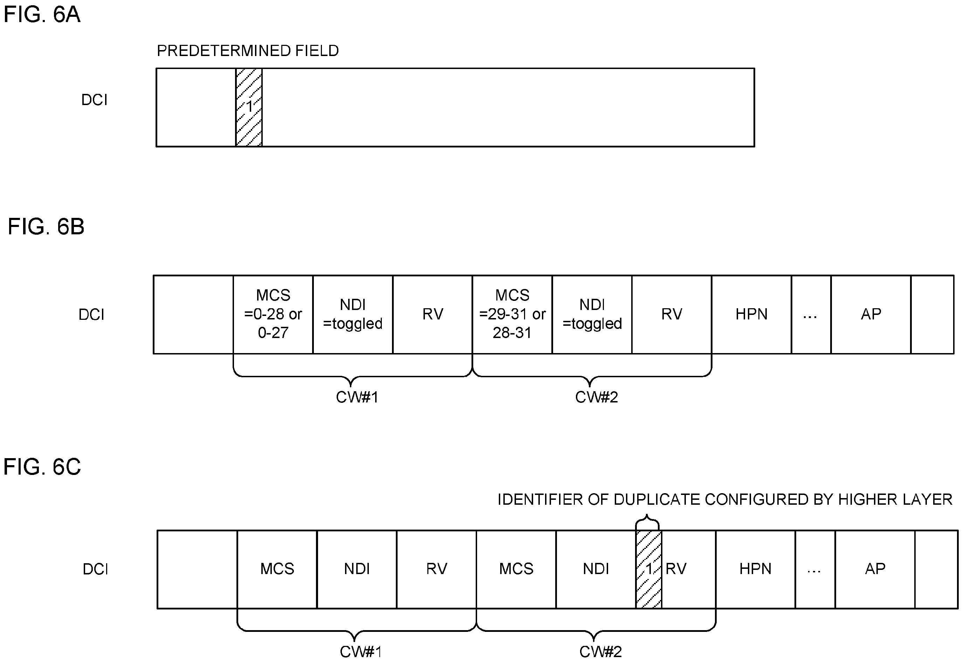

Figs. 6A to 6C are diagrams illustrating an example of DCI used for scheduling CWs #1 and #2 according to the second aspect.

### (6.4.1) Additional fields

As illustrated in Fig. 6A, the above single piece of DCI may be added with a predetermined number of bits (for example, one bit) indicating whether the CWs #1 and #2 are duplicates of a single TB. The UE may control the soft combining of the CWs #1 and #2 based on the value of the field.

For example, when the value of the field is a certain value (for example, 1), the UE may consider that the CWs #1 and #2 scheduled in the DCI #1 and #2 are duplicates of a single TB, and soft combine the CWs #1 and #2.

### (6.4.2) Field value set for either CWs #1 or #2

In general, when scheduling two TBs with a single piece of DCI, the DCI may include a set of values for one or more fields (field value set) for each TB. When scheduling two CWs based on the same TB, the field value set for each TB can be paraphrased as the field value set for each CW.

When the CWs #1 and #2 are duplicates of a single TB, it is sufficient that the field value sets for each TB such as MCS field, NDI field, and RV field are the same, and one of them is redundant.

Therefore, the UE may perform reception processing (for example, demodulation and decoding) of both the CWs #1 and #2 based on the field value set of either the CWs #1 or #2, and recognize whether the CWs #1 and #2 are duplicates of a single TB based on the other field value set (based on whether each value is inconsistent). That is, the UE may control the soft combining of the CWs #1 and #2 based on the field value set of either the CWs #1 or #2 in the DCI.

For example, as illustrated in Fig. 6B, in either the CWs #1 or #2 (CW #2 in Fig. 6B), when the NDI field value is toggled (that is, indicating that the CW is new data), but the MCS field value (MCS index) is a specific value (for example, any of 29 to 31 or 28 to 31) (that is, indicating that the CW is retransmission data), the UE may consider that the CWs #1 and #2 scheduled in the DCI are duplicates of a single TB, and soft combine the CWs #1 and #2.

On the other hand, when each values in the field value sets of each of the CWs #1 or CW #2 are consistent, the UE may consider that the CWs #1 and #2 scheduled by the above single piece of DCI are not duplicates of a single TB, and does not have to soft combine the CWs #1 and #2.

### (6.4.3)TBS

The UE may control the soft combining of the CWs #1 and #2 based on the TB size (TBS) corresponding to each of the CWs #1 and #2, which is determined based on the value of a predetermined field (for example, MCS field) in the DCI.

The UE determines the TBS corresponding to the CW #1 based on the MCS field value (MCS index) for the CW #1 in a single piece of DCI. Similarly, the UE determines the TBS corresponding to the CW #2 based on the MCS field value for the CW #2 in a single piece of DCI.

For example, when the determined TBSs for the CWs #1 and #2 are the same (and the TBS is less than or equal to or less than a predetermined threshold), the UE may consider that the CWs #1 and #2 scheduled by a single piece of DCI are duplicates of a single TB, and soft combine the CWs #1 and #2.

On the other hand, when the determined TBSs for the CWs #1 and #2 are not the same, or when the TBSs are the same but are greater than or equal to or greater than a predetermined threshold, the UE may consider that the CWs #1 and #2 scheduled by a single piece of DCI are not duplicates of a single TB, and does not have to soft combine the CWs #1 and #2.

### (6.4.4) At least one bit of predetermined field configured in higher layer

When configuration is performed in the higher layer so that at least one bit of a predetermined field in the DCI indicates whether the CWs #1 and #2 are duplicates of a single TB, the UE may control the soft combining of the CWs #1 and #2 based on the bit value. Here, an example in which the predetermined field is an RV field for the CW #2 will be described, but the present disclosure is not limited to this.

For example, in Fig. 6C, the UE may receive information indicating, by a predetermined bit (for example, most significant bit (MSB)) of the RV field for the CW #2, whether the CWs #1 and #2 are duplicates of a single TB (whether the CW #2 is a copy of the CW #1). For example, for the UE, the use of the predetermined bit of the RV field for the CW #2 may be configured by higher layer signaling.

When a predetermined bit of the RV field for the CW #2 is a specific value (for example, MSB is 1), the UE may consider that the CWs #1 and #2 scheduled by a single piece of DCI are duplicates of a single TB, and soft combine the CWs #1 and #2. In this case, the UE may control the reception processing (for example, decoding) of the RV based on the RV (for example, 0 or 2) indicated by the value of the other bit (for example, the least significant bit (LSB)) of the RV field.

On the other hand, when a predetermined bit of the RV field for the CW #2 is not the specific value described above (for example, 0), the UE may consider that the CWs #1 and #2 scheduled by a single piece of DCI are not duplicates of a single TB, and does not have to soft combine the CWs #1 and #2.

According to the second aspect, soft combining of the CWs #1 and #2 can be appropriately controlled when the CWs #1 and #2 generated based on the same TB are scheduled by a single piece of DCI.

### (Radio communication system)

A configuration of a radio communication system according to one embodiment of the present disclosure is hereinafter described. In this radio communication system, communication is performed using any one of the radio communication methods according to the embodiments of the present disclosure or a combination thereof.

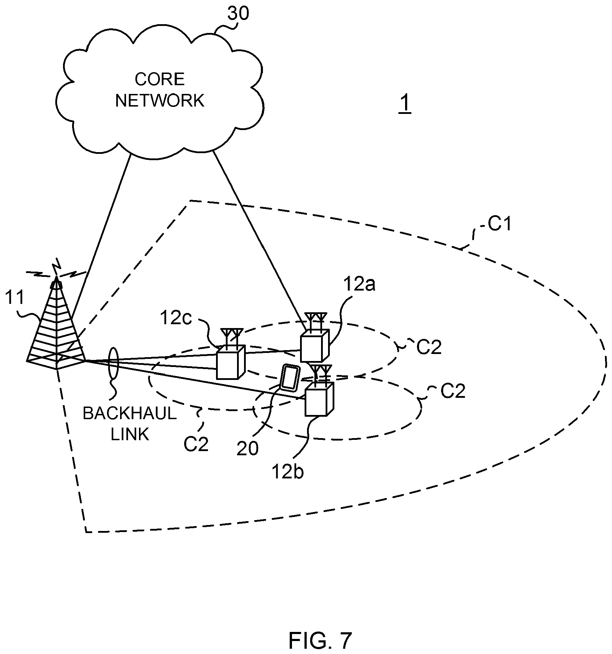

Fig. 7 is a diagram illustrating an example of a schematic configuration of a radio communication system according to one embodiment. A radio communication system 1 may be a system that implements communication using long term evolution (LTE), 5th generation mobile communication system new radio (5G NR), and the like specified by third generation partnership project (3GPP).

Further, the radio communication system 1 may support dual connectivity (multi-RAT dual connectivity (MR-DC)) between a plurality of radio access technologies (RATs). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminals 20 are not limited to the aspects illustrated in the drawings. Hereinafter the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation and dual connectivity (DC) using a plurality of component carriers (CC).

Each CC may be included in at least one of a frequency range 1 (FR1) and a frequency range 2 (FR2). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

The user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include, for example, at least one of evolved packet core (EPC), 5G core network (5GCN), next generation core (NGC), and the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by the user terminals 20, a physical broadcast channel (PBCH), a physical downlink control channel (PDCCH), or the like may be used.

In the radio communication system 1, as an uplink channel, a physical uplink shared channel (PUSCH) shared by the user terminals 20, a physical uplink control channel (PUCCH), a physical random access channel (PRACH), or the like may be used.

PDSCH transmits user data, higher layer control information, system information block (SIB), and the like. PUSCH may transmit user data, higher layer control information, and the like. PBCH may transmit master information block (MIB).

PDCCH may transmit lower layer control information. The lower layer control information may include, for example, downlink control information (DCI) including scheduling information of at least one of PDSCH and PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

A control resource set (CORESET) and a search space may be used to detect PDCCH. CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

By means of PUCCH, channel state information (CSI), delivery confirmation information (for example, hybrid automatic repeat request acknowledgement (HARQ-ACK), which may be referred to as ACK/NACK or the like), scheduling request (SR), and the like may be transmitted. By means of PRACH, a random access preamble for establishing a connection with a cell may be transmitted.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. Note that SS, SSB, or the like may also be referred to as a reference signal.

In the radio communication system 1, a sounding reference signal (SRS), a demodulation reference signal (DMRS), and the like may be transmitted as an uplink reference signal (UL-RS). Note that DMRS may be referred to as a UE-specific reference signal.

### (Base station)

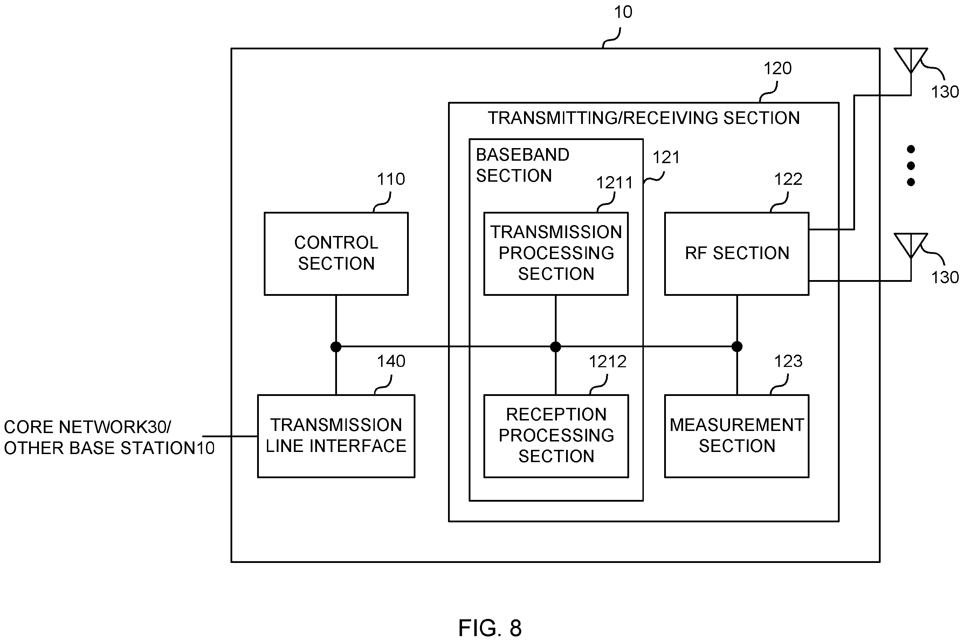

Fig. 8 is a diagram illustrating an example of a configuration of a base station according to an embodiment. The base station 10 includes a control section 110, a transmitting/receiving section 120, a transmitting/receiving antenna 130, and a transmission line interface 140. Note that one or more of the control sections 110, one or more of the transmitting/receiving sections 120, one or more of the transmitting/receiving antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmitting/receiving circuit, and the like, which are described based on common recognition in the technical field to which the present disclosure relates.

The transmitting/receiving section 120 may be constituted as an integrated transmitting/receiving section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmitting/receiving antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data acquired from the control section 110 or control information to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmitting/receiving section 120, the transmitting/receiving antenna 130, and the transmission line interface 140.

The transmitting/receiving section 120 receives an uplink signal (for example, uplink control channel, uplink shared channel, and uplink reference signal). The transmitting/receiving section 120 transmits a downlink signal (for example, downlink control channel, downlink shared channel, downlink reference signal, downlink control information, or higher layer parameter).

Specifically, the transmitting/receiving section 120 transmits or receives a plurality of codewords generated based on the same transport block using a plurality of layers associated with a plurality of antenna ports for demodulation reference signals.

The transmitting/receiving section 120 may transmit a plurality of pieces of downlink control information for scheduling each of the plurality of codewords (first aspect).

The transmitting/receiving section 120 may transmit a single piece of downlink control information for scheduling the plurality of codewords (second aspect).

The control section 110 may control the soft combining of the plurality of codewords.

### (User terminal)

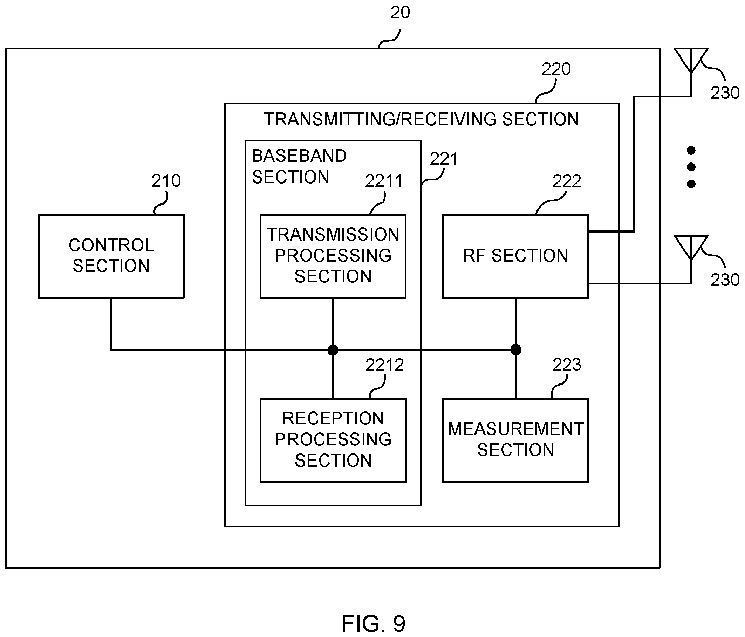

Fig. 9 is a diagram illustrating an example of a configuration of a user terminal according to an embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmitting/receiving circuit, and the like, which are described based on common recognition in the technical field to which the present disclosure relates.

The transmitting/receiving section 220 may be constituted as an integrated transmitting/receiving section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmitting/receiving antenna 230 can be constituted by an antenna described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) does not have to perform DFT processing as the transmission processing.

The transmitting/receiving section 220 (RF section 222) may perform modulation to a radio frequency band, filtering processing, amplification, and the like on the baseband signal, and may transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may be constituted by at least one of the transmitting/receiving section 220, the transmitting/receiving antenna 230, and the transmission line interface 240.

The transmitting/receiving section 220 transmits an uplink signal (for example, uplink control channel, uplink shared channel, and uplink reference signal). The transmitting/receiving section 220 receives a downlink signal (for example, downlink control channel, downlink shared channel, downlink reference signal, downlink control information, or higher layer parameter).

Specifically, the transmitting/receiving section 220 receives or transmits a plurality of codewords generated based on the same transport block using a plurality of layers respectively associated with a plurality of antenna ports for demodulation reference signals.

The transmitting/receiving section 220 may receive a plurality of pieces of downlink control information for scheduling each of the plurality of codewords (first aspect).

The transmitting/receiving section 220 may receive a single piece of downlink control information for scheduling the plurality of codewords (second aspect).

The control section 210 may control the soft combining of the plurality of codewords.

For example, the control section 210 may control the soft combining of the plurality of codewords based on a radio network temporary identifier (RNTI), search space, format, or value of one or more fields used to scramble a cyclic redundancy code (CRC) of at least one of the plurality of pieces of downlink control information (third soft combining control of the first aspect).

The control section 210 may control the soft combining of the plurality of codewords based on a radio network temporary identifier (RNTI), search space, format, or value of one or more fields used to scramble a cyclic redundancy code (CRC) of the single piece of downlink control information (third soft combining control of the second aspect).

The control section 210 may control the soft combining of the plurality of codewords based on the information configured by the higher layer signaling (the first and second soft combining controls of the first aspect, and the fourth and fifth soft combining controls of the second aspect).

### (Hardware configuration)

Note that the block diagrams that have been used to describe the above embodiments illustrate blocks in functional units. These functional blocks (configuration units) may be implemented in arbitrary combinations of at least one of hardware or software. Also, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be called as a transmitting unit, a transmitter, and the like. In any case, as described above, the implementation method is not particularly limited.

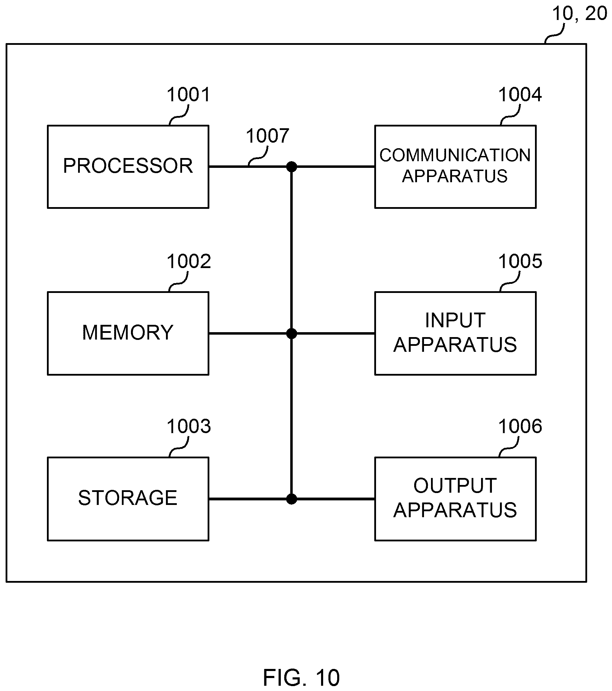

For example, the base station, the user terminal, and so on according to one embodiment of the present disclosure may function as a computer that executes the processing of the radio communication method of the present disclosure. Fig. 10 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as an apparatus, a circuit, an apparatus, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Furthermore, processes may be implemented with one processor, or processes may be implemented in parallel, in sequence, or in different manners, on two or more processors. Note that the processor 1001 may be implemented with one or more chips.

Each function of the base station 10 and the user terminal 20 is implemented by, for example, reading predetermined software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be constituted by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and so on from at least one of the storage 1003 or the communication apparatus 1004 into the memory 1002, and executes various processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register", a "cache", a "main memory (primary storage apparatus)", and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separating the transmission section 120a (220a) and the reception section 120b (220b) from each other.

The input apparatus 1005 is an input device for receiving input from the outside (for example, a keyboard, a mouse, a microphone, a switch, a button, a sensor, and so on). The output apparatus 1006 is an output device for allowing sending output to the outside (for example, a display, a speaker, a light emitting diode (LED) lamp, and so on). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. The signal may be a message. A reference signal can be abbreviated as an "RS", and may be referred to as a "pilot", a "pilot signal", and so on, depending on which standard applies. Furthermore, a "component carrier (CC)" may be referred to as a "cell", a "frequency carrier", a "carrier frequency", and so on.

A radio frame may be formed with one or more durations (frames) in the time domain. Each of one or more periods (frames) constituting a radio frame may be referred to as a "subframe". Furthermore, a subframe may be formed with one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like). Also, a slot may be a time unit based on numerology.

A slot may include a plurality of mini slots. Each mini slot may be formed with one or more symbols in the time domain. Also, a mini slot may be referred to as a "subslot". Each mini slot may be formed with fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot, and a symbol all represent the time unit in signal communication. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

TTI having a period of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe, or one TTI in length. One TTI, one subframe, and the like may be each formed with one or more resource blocks.

Note that one or more RBs may be referred to as a "physical resource block (PRB (Physical RB))", a "subcarrier group (SCG)", a "resource element group (REG)", a "PRB pair", an "RB pair", and so on.

Furthermore, a resource block may be comprised of one or more resource elements (REs). For example, one RE may be a radio resource field of one subcarrier and one symbol.

The bandwidth part (BWP) (which may be called partial bandwidth and the like) may represent a subset of consecutive common resource blocks (RB) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a predetermined signal/channel outside the active BWP. Note that "cell", "carrier", and the like in the present disclosure may be replaced with "BWP".

Note that the structures of radio frames, subframes, slots, mini slots, symbols, and so on described above are merely examples. For example, configurations pertaining to the number of subframes included in a radio frame, the number of slots included in a subframe or a radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and so on can be variously changed.

Furthermore, the information and parameters described in the present disclosure may be represented in absolute values, represented in relative values with respect to given values, or represented using other corresponding information. For example, a radio resource may be specified by a predetermined index.

The names used for parameters and so on in the present disclosure are in no respect limiting. In addition, an equation and so on using these parameters may differ from those explicitly disclosed in the present disclosure. Since various channels (Physical Uplink Control Channel (PUCCH)), Physical Downlink Control Channel (PDCCH), and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals, and so on may be input and output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

The reporting of information is by no means limited to the aspects/embodiments described in the present disclosure, and may be performed using other methods. For example, notification of information in the present disclosure may be performed by using physical layer signaling (for example, downlink control information (DCI), uplink control information (UCI), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as "L1/L2 (Layer 1/Layer 2) control information (L1/L2 control signals)", "L1 control information (L1 control signal)", and so on. Furthermore, the RRC signaling may be called as an RRC message, and may be, for example, an RRC connection setup message, an RRC connection reconfiguration message, and the like. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station or the mobile station may be a device mounted on a moving body, a moving body itself, and the like. The moving body may be a transportation (for example, a car, an airplane, and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything), and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain operations that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, regarding the methods described in the present disclosure, elements of various steps are presented using an illustrative order, and are not limited to the presented particular order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The terms "judging (determining)" as used in the present disclosure may encompass a wide variety of operations. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some operation.

In addition, to "judge (determine)" may be replaced with "assuming", "expecting", "considering", and so on.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the term may mean that "A and B are each different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be implemented with corrections and modifications, without departing from the spirit and scope of the invention defined by the recitations of claims. Consequently, the description of the present disclosure is provided for the purpose of exemplification and explanation, and has no limitative meaning to the invention according to the present disclosure.

## Claims

1. A user terminal comprising:
a reception section that uses a plurality of layers respectively associated with a plurality of antenna ports for demodulation reference signals to receive a plurality of codewords generated based on a same transport block; and
a control section that controls soft combining of the plurality of codewords.

2. The user terminal according to claim 1, wherein the reception section receives a plurality of pieces of downlink control information for scheduling each of the plurality of codewords.

3. The user terminal according to claim 2, wherein the control section controls the soft combining of the plurality of codewords based on a radio network temporary identifier (RNTI), a search space, a format, or a value of one or more fields used to scramble a cyclic redundancy code (CRC) of at least one of the plurality of pieces of downlink control information.

4. The user terminal according to claim 1, wherein the reception section receives a single piece of downlink control information for scheduling the plurality of codewords.

5. The user terminal according to claim 3, wherein the control section controls the soft combining of the plurality of codewords based on a radio network temporary identifier (RNTI), a search space, a format, or a value of one or more fields used to scramble a cyclic redundancy code (CRC) of the single piece of downlink control information.

6. The user terminal according to any one of claims 1 to 5, wherein the control section controls the soft combining of the plurality of codewords based on information configured by higher layer signaling.
